# EUROPEAN PATENT APPLICATION

(11) **EP 4 487 946 A1**
(43) Date of publication of application: **08.01.2025**
(21) Application number: 24182046.3
(22) Date of filing: 13.06.2024
(51) Int. Cl.: B01J 20/16, B01J 20/30, B01D 53/02

(54) **CARBON DIOXIDE ADSORBENT AND METHOD FOR PRODUCING SAME**

(30) Priority: 16.06.2023 JP 2023099575; 12.06.2024 JP 2024095006
(71) Applicant: Takachiho Shirasu Corp., Miyakonojo-shi, Miyazaki 889-4602 (JP); Nihon University, Tokyo 102-8275 (JP); National Institute of Technology, Hachioji-shi, Tokyo 1930834 (JP)
(72) Inventor: SHINTOME, Masahiro, Miyazaki, 889-4602 (JP); UMEGAKI, Tetsuo, Tokyo, 102-8275 (JP); NOGUCHI, Daisuke, Miyazaki, 885-8567 (JP)
(74) Representative: Schön, Christoph

(57) **Abstract**

Provided is a carbon dioxide adsorbent including at least one of shirasu or shirasu balloon including silicon oxide and aluminum oxide in a total amount of 50% by weight or more, wherein a composition ratio of silicon / aluminum on a surface of each of the shirasu and the shirasu balloon is within a range of 1 to 2.5. Also provided is a method for producing a carbon dioxide adsorbent, the method including an ammonia treatment step of performing an ammonia treatment on a shirasu raw material that includes silicon oxide and aluminum oxide in a total amount of 50% by weight or more.

## Description

### TECHNICAL FIELD

The present invention relates to a carbon dioxide adsorbent and a method for producing the same.

### BACKGROUND

One of the causes of global warming is greenhouse gases such as carbon dioxide, methane, and chlorofluorocarbons emitted into the atmosphere. Since carbon dioxide has a large impact among these greenhouse gases, technologies to remove carbon dioxide from the atmosphere and exhaust gases have been investigated. Methods to remove carbon dioxide include chemical absorption, physical adsorption, membrane separation, adsorptive separation, and cryogenic separation, among which a method to separate and recover carbon dioxide using a carbon dioxide adsorbent is attracting attention.

In the literature (Yu et al., "A Review of CO2 Capture by Absorption and Adsorption", Aerosol and Air Quality Research, 12, 745-769, 2012), zeolites acting as physical adsorbents, and mesoporous adsorbents impregnated with amines are disclosed as carbon dioxide adsorbents.

### SUMMARY OF THE INVENTION

However, conventional zeolite adsorbents and amine-impregnated mesoporous adsorbents have an issue that the adsorbents obtained are expensive due to the complicated production process. In addition, in order to perform efficient separation and recovery of carbon dioxide, improvements in carbon dioxide adsorption performance of adsorbents is awaited.

The present invention has been made in view of such issues as described above, which are inherent in related art. It is an object of the present invention to provide a carbon dioxide adsorbent that can be prepared using an inexpensive material and is capable of adsorbing carbon dioxide with efficiency, and a method for producing the carbon dioxide adsorbent.

A carbon dioxide adsorbent according to a first aspect of the present invention includes at least one of shirasu or shirasu balloon each including silicon oxide and aluminum oxide in a total amount of 50% by weight or more, wherein a composition ratio of silicon / aluminum on a surface of each of the shirasu and the shirasu balloon is within a range of 1 to 2.5.

A carbon dioxide adsorbent according to a second aspect of the present invention is the adsorbent according to the first aspect wherein the shirasu and the shirasu balloon include particles having an average particle size of 2 µm to 3 µm.

A carbon dioxide adsorbent according to a third aspect of the present invention is the adsorbent according to the first or second aspect, wherein at least one of the shirasu or the shirasu balloon is in contact with water.

A method for producing a carbon dioxide adsorbent according to a fourth aspect of the present invention includes an ammonia treatment step of performing an ammonia treatment on a shirasu raw material that includes silicon oxide and aluminum oxide in a total amount of 50% by weight or more.

A method for producing a carbon dioxide adsorbent according to a fifth aspect of the present invention is the producing method according to the fourth aspect, further including a heating step of heating the shirasu raw material before the ammonia treatment step.

A method for producing a carbon dioxide adsorbent according to a sixth aspect of the present invention is the producing method according to the fourth or fifth aspect, wherein the shirasu raw material includes particles having an average particle size of 2 µm to 3 µm.

### BRIEF DESCRIPTION OF THE DRAWINGS

FIG. 1 is a diagram illustrating scanning electron micrographs of shirasu raw materials, and samples 1 to 3.
FIG. 2A is a table illustrating compositions calculated from the results of an energy-dispersive X-ray analysis, and acid sites calculated using a titration method, for shirasu raw materials and samples 1 to 3.
FIG. 2B is a table illustrating various properties calculated from the results of a nitrogen adsorption/desorption measurement for the shirasu raw materials and samples 1 to 3.
FIG. 2C is a table illustrating compositions of Si and Al on the surfaces of the shirasu raw material and samples calculated from the results of an XPS measurement, and Si/Al ratios, for the shirasu raw material and samples 1 to 3.
FIG. 3 is a diagram illustrating spectral results of an infrared spectroscopy analysis for shirasu raw materials and samples 1 and 2 subjected to a carbon dioxide adsorption test.
FIG. 4 is a diagram illustrating spectral results of the infrared spectroscopy analysis for shirasu raw materials and samples 2 and 3 subjected to the carbon dioxide adsorption test under contact with water.

### DETAILED DESCRIPTION OF THE INVENTION

A carbon dioxide adsorbent and a method for producing the carbon dioxide adsorbent according to the present embodiment will be described in detail below. Note that in this specification, the "carbon dioxide adsorbent" is also referred to as an "adsorbent".

### [Carbon dioxide adsorbent]

The carbon dioxide adsorbent according to the present embodiment includes at least one of shirasu or shirasu balloon each containing silicon oxide and aluminum oxide in the total amount of 50% by weight or more. In the carbon dioxide adsorbent, the composition ratio of silicon (Si) / aluminum (Al) on the surface of each of the shirasu and the shirasu balloon (the value of [number of moles of silicon] / [number of moles of aluminum] on the surfaces) is within a range of 1 to 2.5.

Shirasu is popularly known as white sandy sediment and is a generic term for white coarse volcanic ejecta and secondary sediments derived therefrom which are widely distributed in southern Kyushu of Japan. A crystallization differentiation effect occurs due to cooling of high-temperature magma, and SiO₂, Al₂O₃, Fe₂O₃, MgO, CaO, Na₂O, K₂O, and the like, which are the main components of magma, come together to form shirasu. Shirasu was formed through explosive eruption shortly after crystallization as minerals, and is made from about 30% crystalline minerals with the remainder of about 70% amorphous volcanic glass.

As the crystalline minerals, plagioclase is the most abundant mineral, with some hypershene, quartz, augite, and magnetite also included. In addition, this amorphous volcanic glass forms a porous pumice as a result of the rapid emission of volatile components in the magma. The amorphous volcanic glass contains SiO₂ in an amount of 65% to 73% by weight, Al₂O₃ in an amount of 12% to 16% by weight, CaO in an amount of 2% to 4% by weight, Na₂O in an amount of 3% to 4% by weight, K₂O in an amount of 2% to 4% by weight, and iron in an amount of 1% to 3% by weight.

Shirasu is what forms the Shirasu Plateau. The Shirasu Plateau extends with a thickness of up to 150 meters from Kagoshima Prefecture to southern Miyazaki Prefecture in Japan.

Shirasu was deposited all at once as a large amount of pyroclastic flow, and thus it did not mix with other soil and became a thick layer, forming the Shirasu Plateau. Typical soil is a finely ground powder of rock mixed with a variety of organic matter from the actions of plants and microorganisms.

In contrast, shirasu contains few nutrients (organic matter) because it is made into powder before magma becomes rock, and is a high-purity inorganic ceramic material calcined at extremely high temperature from the magma state. That is, shirasu is a porous material mainly made from volcanic glass and contains silicic acid in an amount of 60% to 80% by weight.

Here, Takachiho Shirasu (shirasu from Takachiho Shirasu Corp.) is analyzed, and the amounts contained of components in % by weight are as follows. The ignition loss is 2.7%, SiO₂ is 67.8%, Al₂O₃ is 15.1%, Na₂O is 3.7%, CaO is 2.2%, Fe₂O₃ is 2.5%, K₂O is 2.2%, TiO₂ is 0.27%, MnO is 0.06%, MgO is 0.58%, P₂O₅ is 0.03%, SO₃ is 0.20%, and Cl⁻ is less than 0.001%. The ignition loss is due to sulfur trioxide (SO₃), which is measured according to JIS R5202. Silicon oxide (IV) (SiO₂) was measured using a combination of a coagulation gravimetric method and an absorptiometric method. Aluminum oxide (Al₂O₃), iron oxide (III) (Fe₂O₃), titanium oxide (IV) (TiO₂), calcium oxide (CaO), magnesium oxide (MgO), sodium oxide (Na₂O), potassium oxide (K₂O), manganese oxide (MnO), and phosphorus pentoxide (P₂O₅) were measured using hydrofluoric acid, nitric acid, and perchloric acid decomposition-ICP emission spectrometry. Elution of chloride ions (Cl⁻) was performed according to Notice No. 13 of the Ministry of the Environment, and the test solution was measured using ion chromatography.

Note that shirasu other than Takachiho Shirasu (for example, shirasu from Kagoshima), or matter having a similar composition as that of Takachiho Shirasu, may be used instead of Takachiho Shirasu.

As described above, the shirasu and shirasu balloon contain silicon oxide and aluminum oxide in a total amount of 50% by weight or more. The shirasu and shirasu balloon may contain silicon oxide and aluminum oxide in a total amount of 60% by weight or more, of 70% by weight or more, or of 80% by weight or more. The shirasu and shirasu balloon may contain silicon oxide in an amount of 50% by weight or more, or of 60% by weight or more. The shirasu and shirasu balloon may contain aluminum oxide in an amount of 10% by weight or more, or of 15% by weight or more. The shirasu and shirasu balloon also contain plagioclase, quartz, titanium oxide, and the like. A large number of minute air bubbles are present in particles of the shirasu. Note that shirasu, which is powdery, is treated as a nuisance because it is not suitable for paddy fields due to poor water retention and tends to cause landslides during heavy rains.

Note that the shirasu balloon is a fine balloon-like material (particulate hollow bodies) obtained by calcining and foaming the shirasu at a high temperature of about 1,000 °C.

Here, the adsorbent according to the present embodiment includes at least one of shirasu or shirasu balloon, and further the composition ratio of silicon (Si)/aluminum (Al) on the surface of each of the shirasu and the shirasu balloon (the value of the number of moles of silicon/the number of moles of aluminum on the surface) is within a range of 1 to 2.5. The composition ratio of silicon (Si)/aluminum (Al) on the surface of ordinary shirasu is about 5, but the composition ratio of Si/Al of the shirasu in the adsorbent according to the present embodiment is 2.5 or less. This increases the acid sites in the shirasu, which is presumed to enhance the carbon dioxide adsorption capacity. Note that the composition ratio of silicon (Si) / aluminum (Al) on the surface of each of the shirasu and the shirasu balloon as the adsorbent is preferably within a range of 1 to 2.2, more preferably of 1 to 2.0, even more preferably of 1 to 1.8, and particularly preferably of 1 to 1.5.

The shirasu according to the present embodiment preferably contains particles having an average particle size of 2 µm to 3 µm in order to enhance activity as an adsorbent. The shirasu balloon according to the present embodiment also preferably contains particles having an average particle size of 2 µm to 3 µm in order to enhance activity as an adsorbent. Further, it is preferable that a majority of the shirasu and shirasu balloon as an adsorbent be particles having an average particle size of 2 µm to 3 µm. Note that the average particle size of the shirasu and shirasu balloon can be measured using a laser diffraction scattering method. The inclusion of such fine particles increases the specific surface area of the adsorbent, thereby increasing adsorption sites of carbon dioxide and enabling efficient carbon dioxide adsorption.

The adsorbent according to the present embodiment can exhibit carbon dioxide adsorption ability even in a dry state. However, when the shirasu and shirasu balloon of the adsorbent are in contact with water, it becomes possible to improve the carbon dioxide adsorption ability. Although the mechanism is unclear by which the carbon dioxide adsorption ability is enhanced through the contact of the shirasu and shirasu balloon with water, it becomes possible to adsorb more carbon dioxide through the contact of the shirasu and shirasu balloon with liquid water compared to a non-contact state, as described in an example below. Note that although the amount of water brought into contact with the shirasu and shirasu balloon is not particularly limited, the acid sites of the shirasu and shirasu balloon may contribute to the adsorption of carbon dioxide, and thus it is preferable that the amount of water is such that it does not cover all of the acid sites. Since water itself contributes to the improvement of the carbon dioxide adsorption capacity, the water brought into contact with the shirasu and shirasu balloon is not limited to a liquid, but may also be a gas or solid.

The adsorbent according to the present embodiment can improve the amount of carbon dioxide adsorbed as the pressure of the carbon dioxide gas brought into contact increases. Thus, in order to improve the adsorption amount of the adsorbent according to the present embodiment, it is preferable to increase the pressure of the gas brought into contact, and it is also preferable to increase the concentration of carbon dioxide in the gas brought into contact.

As described above, the carbon dioxide adsorbent according to the present embodiment includes at least one of the shirasu or the shirasu balloon each containing silicon oxide and aluminum oxide in the total amount of 50% by weight or more, and the composition ratio of silicon/aluminum on the surface of the shirasu and shirasu balloon is within a range of 1 to 2.5. Since the Si/Al composition ratio on the surface of the shirasu and shirasu balloon is within this range, the acid sites tend to increase, and thus it is thought that the shirasu and shirasu balloon are activated, and the amount of carbon dioxide adsorbed increases. That is, as the Si/Al composition ratio on the surface of the shirasu and shirasu balloon approaches 1, the composition of aluminum on the surface increases, and aluminum enters the silicon oxide network. Consequently, the number of acid sites increases, and thus it is thought that a shirasu raw material is activated and the amount of carbon dioxide adsorbed increases.

In the adsorbent, the shirasu and shirasu balloon preferably contain particles having an average particle size of 2 µm to 3 µm. This increases the surface area of the adsorbent, enabling further promotion of carbon dioxide adsorption.

In the adsorbent, at least one of the shirasu or shirasu balloon is preferably in contact with water. Although the mechanism is unclear by which the carbon dioxide adsorption capacity is improved, when the shirasu and shirasu balloon having the above-described Si/Al composition ratio comes into contact with water, it becomes possible to adsorb more carbon dioxide compared to the non-contact state.

### [Method for producing carbon dioxide adsorbent]

Next, a method for producing a carbon dioxide adsorbent according to the present embodiment will be described. The producing method according to the present embodiment includes an ammonia treatment step of performing an ammonia treatment on a shirasu raw material containing silicon oxide and aluminum oxide in the total amount of 50% by weight or more.

The shirasu raw material is a material containing at least one of shirasu or shirasu balloon. That is, the shirasu raw material is a material made from only shirasu, from only shirasu balloon, or from only a mixture of shirasu and shirasu balloon. Shirasu, which is the shirasu raw material, is made from coarse particles having an average particle size of 50 µm to 70 µm and small particles having an average particle size of 2 µm to 3 µm. The mass ratio ([mass of small particles] / [mass of coarse particles]) of small particles having an average particle size of 2 µm to 3 µm to coarse particles having an average particle size of 50 µm to 70 µm is within a range of 0.1 to 10. In shirasu balloon, which is the shirasu raw material, almost all is made from small particles having an average particle size of 2 µm to 3 µm. Note that there is little change in the particle size of the shirasu raw material even after a heating step and the ammonia treatment step described below.

The ammonia treatment in the producing method according to the present embodiment is a treatment of suspending the shirasu raw material at room temperature in ammonia water having a predetermined ammonia concentration to prepare a suspension, and then stirring the suspension for a predetermined time. Note that when the Si/Al ratio on the surface of the shirasu and shirasu balloon is within a range of 1 to 2.5, the concentration of ammonia in the ammonia water is not particularly limited. Further, the stirring time of the suspension is not also particularly limited. The concentration of ammonia in the ammonia water can be, for example, within a range of 20% to 35%, or of 25% to 30%. The stirring time of the suspension can be, for example, within a range of 1 to 8 hours, or of 3 to 6 hours.

After the ammonia treatment, the shirasu raw material subjected to the ammonia treatment is filtered and then dried at room temperature, thus obtaining the adsorbent according to the present embodiment. That is, by performing this type of ammonia treatment, the composition ratio of silicon to aluminum on the surface of the shirasu and shirasu balloon can be set to a range of 1 to 2.5.

Note that in the method for producing the adsorbent according to the present embodiment, a heat treatment (heating process) of heating the shirasu raw material may be performed before performing the ammonia treatment. The heat treatment is performed to remove impurities such as organic substances contained in the shirasu raw material therefrom.

The conditions of the heat treatment are not particularly limited, and the heat treatment can be performed under conditions under which impurities can be removed. Specifically, the temperature of the heat treatment is preferably within a range of 350 to 700 °C, and more preferably of 400 to 500 °C. The time of the heat treatment is preferably within a range of 1 to 5 hours, for example. Further, the heating atmosphere may be in air or under an inert atmosphere. Note that the heat treatment may be started at room temperature, for example, and then the temperature may be gradually increased. The rate of increase in temperature here can be within a range of 2 to 50 °C/min, or of 5 to 20 °C/min.

In the method for producing the adsorbent according to the present embodiment, after the ammonia treatment is performed on the shirasu raw material, a calcination treatment may be performed on the shirasu and shirasu balloon subjected to the ammonia treatment. The temperature of the calcination treatment is preferably within a range of 350 to 700 °C, more preferably of 400 to 500 °C, and preferably about 450 °C. The calcination treatment may be started at room temperature, for example, and then the temperature may be gradually increased. The rate of increase in temperature here can be within a range of 2 to 50 °C/min or of 5 to 20 °C/min.

As described above, the method for producing the carbon dioxide adsorbent according to the present embodiment includes the ammonia treatment step of performing the ammonia treatment on the shirasu raw material containing silicon oxide and aluminum oxide in the total amount of 50% by weight or more. By performing such an ammonia treatment, the composition ratio of silicon / aluminum on the surface of the shirasu and shirasu balloon can be set to a range of 1 to 2.5, enabling the adsorption of carbon dioxide. According to the producing method according to the present embodiment, since the shirasu and/or shirasu balloon was used as the raw material, the adsorbent can be obtained at a lower cost compared to when zeolite or mesoporous silica is used as in Non-Patent Literature 1.

In the producing method, it is preferable to further include the heating step of heating the shirasu raw material before the ammonia treatment step. Thus, even when the shirasu raw material contains impurities such as organic substances, the impurities are removed before the ammonia treatment. Consequently, the composition ratio of silicon / aluminum on the surface of the shirasu and shirasu balloon approaches 1, and the acid sites increase, enabling further enhancement of the carbon dioxide adsorption capacity.

In the producing method, the shirasu raw material preferably contains particles having an average particle size of 2 µm to 3 µm. As described above, even when the shirasu raw material is subjected to the ammonia treatment and heat treatment, the size of the shirasu raw material does not change significantly. When the shirasu raw material contains particles of 2 µm to 3 µm, the adsorbent obtained also contains particles of the same sizes. Consequently, the surface area of the adsorbent increases, enabling further promotion of the carbon dioxide adsorption.

### EXAMPLES

The present embodiment will be described in more detail below using examples, but the present embodiment is not limited to these examples.

### [Sample preparation]

By using shirasu and shirasu balloon as the shirasu raw materials, an ammonia-treated shirasu and an ammonia-treated shirasu balloon of examples 1 to 3 were prepared as follows.

### (Example 1)

First, shirasu was prepared as the shirasu raw material. The shirasu had a specific surface area of 8.8 m²/g and was made from coarse particles having an average particle size of 50 µm to 70 µm and small particles having an average particle size of 2 µm to 3 µm.

Next, 0.8 g of the shirasu raw material was suspended in 20 mL of 28% ammonia water and stirred at room temperature for 4 to 5 hours. The suspension was then filtered and dried in a desiccator to obtain sample 1 of this example. Note that in this description, this sample 1 is also referred to as "sample 1SSM NH₃".

### (Example 2)

First, the same shirasu as in example 1 was prepared as the shirasu raw material, and then the shirasu was calcined in the air at 450 °C for 2 hours to obtain a calcined shirasu. Note that the calcination treatment was performed by raising the temperature from room temperature to 450 °C at a temperature rise rate of 50 °C/min, and then holding the temperature for 2 hours.

Next, 0.8 g of the calcined shirasu was suspended in 20 mL of 28% ammonia water and stirred at room temperature for 4 to 5 hours. The suspension was then filtered and dried in a desiccator to obtain sample 2 of this example. This sample 2 is also referred to as "sample 2SSM cal NH₃".

### (Example 3)

First, shirasu balloon was prepared as the shirasu raw material. The shirasu balloon had a specific surface area of 3.2 m²/g and made from small particles having an average particle size of 2 µm to 3 µm. Note that since the shirasu balloon includes hollow bodies made by calcining and foaming shirasu at a high temperature of about 1,000 °C, it corresponds to the raw material obtained by calcining the shirasu.

Next, 0.8 g of the shirasu raw material was suspended in 20 mL of 28% ammonia water and stirred at room temperature for 4 to 5 hours. The suspension was filtered and then dried in a desiccator to obtain sample 3 of this example. Note that in this description, this sample 3 is also referred to as "sample 3A3NN NH₃".

### [Evaluation]

Each sample of examples was subjected to microscopic observation, composition analysis, specific surface area measurement, pore volume measurement, average pore size measurement, surface composition analysis, and a carbon dioxide adsorption test as follows.

### (Microscopic observation)

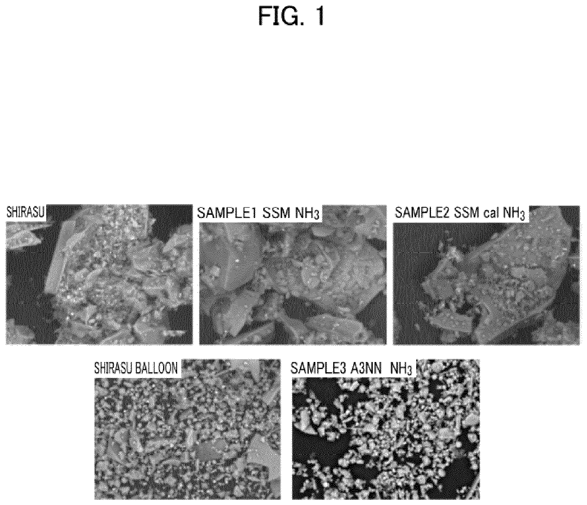

Samples 1 to 3 were observed using a scanning electron microscope. FIG. 1 illustrates the observation results of each sample. Note that FIG. 1 also illustrates the observation results of the shirasu and the shirasu balloon, which are shirasu raw materials.

As illustrated in FIG. 1, when comparing the shirasu, which was the shirasu raw material, with samples 1 and 2, no significant difference in the size and shape of particles could be confirmed before and after the ammonia treatment and the heat treatment. That is, the shirasu, which was the shirasu raw material, as well as samples 1 and 2, were made from coarse particles of about 50 µm to 70 µm and small particles of about 2 µm to 3 µm.

Similarly, when comparing the shirasu balloon, which was the shirasu raw material, with sample 3, no significant differences in the size and shape of particles could be confirmed before and after the ammonia treatment and the heat treatment. That is, both the shirasu balloon, which was the shirasu raw material, and sample 3 were made from small particles of about 2 µm to 3 µm.

### (Composition analysis)

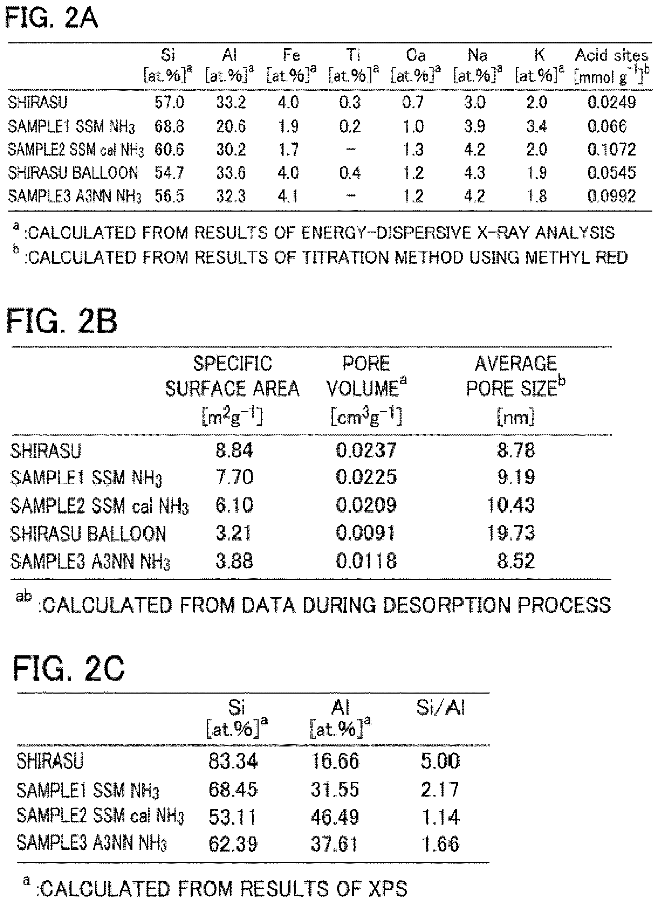

An energy-dispersive X-ray analysis (EDX) was performed on samples 1 to 3, and the shirasu and shirasu balloon, which were shirasu raw materials, and the composition of each sample was calculated from the results. In addition, the acid sites of samples 1 to 3 and the shirasu raw materials were calculated through a titration method using methyl red. Specifically, the acid sites of samples 1 to 3 and shirasu raw materials were calculated by dripping n-butylamine with methyl red as an indicator. FIG. 2A illustrates the composition and calculation result of acid sites of each sample.

From FIG. 2A, it is evident that the ratio of aluminum decreases by performing the ammonia treatment on the shirasu and shirasu balloon. Further, it was confirmed that the decrease of aluminum in sample 2 subjected to the ammonia treatment after the heat treatment was smaller than that in sample 1 without the heat treatment. These results suggest that the amount of elution of aluminum oxide differs depending on the treatment conditions. It is also evident that the acid sites increase by performing the ammonia treatment and that the acid sites further increase by performing the ammonia treatment after the heat treatment.

### (Specific surface area measurement, pore volume measurement, and average pore size measurement)

The specific surface area, pore volume, and average pore size were measured using a nitrogen gas adsorption method for samples 1 to 3, and the shirasu and shirasu balloon, which were shirasu raw materials. FIG. 2B illustrates the measurement results.

From FIG. 2B, the specific surface area and the pore volume of sample 1 and sample 2 using the shirasu as the raw material were larger than those of sample 3 using the shirasu balloon as the raw material. However, it was confirmed that the effect of the heat treatment and the ammonia treatment was small, and the specific surface area and the pore volume did not decrease significantly when comparing the same raw materials such as the shirasu, sample 1, and the sample 2. Similarly, it was confirmed that the effect of the ammonia treatment was small when comparing the same raw material such as the shirasu balloon and sample 3.

### (Surface composition analysis)

XPS (X-ray Photoelectron Spectroscopy) measurement was performed to analyze the surface conditions of samples 1 to 3 and the shirasu, which was the shirasu raw material. Consequently, peaks of Si (silicon), Al (aluminum), and O (oxygen) were mainly observed in all samples. These results suggested that the surface of all samples was mainly made from silicon oxide and aluminum oxide.

Further, FIG. 2C illustrates the composition of silicon and aluminum on the surface of samples calculated from the XPS measurement results. From this result, it was confirmed that aluminum on the surface tended to increase by performing the heat treatment and the ammonia treatment on the shirasu raw material. In particular, it was confirmed that aluminum in sample 2, subjected to the ammonia treatment after the heat treatment, increased relative to those of the shirasu and sample 1. The composition ratio of silicon/aluminum (Si/Al ratio) on the surface of the shirasu itself was 5.00, while that of sample 1 subjected to the ammonia treatment was 2.17, and that of sample 2 subjected to the ammonia treatment after the heat treatment was 1.14.

Thus, it is evident that the Si/Al ratio on the surface of the shirasu becomes 2.5 or less by performing the ammonia treatment, and that the Si/Al ratio decreases further to approach 1 by further performing the ammonia treatment after the heat treatment. Note that it is evident from FIG. 2C that the Si/Al ratio on the surface of the shirasu balloon also becomes 2.5 or less by performing the ammonia treatment.

### (Carbon dioxide adsorption test)

A carbon dioxide adsorption test was performed on samples 1 and 2, and untreated shirasu (shirasu raw material). Specifically, 0.1 g of each sample was weighed and then placed in a pressure resistant container. Then, each sample was brought into contact with pure CO₂ gas for 1 hour under room temperature at a pressure of 1 MPa. Then, after each sample was taken out from the pressure-resistant container, the amount of carbon dioxide adsorbed by each sample was calculated using thermogravimetric analysis (TG). The calculated amount of carbon dioxide adsorbed by each sample is listed in Table 1.

**[Table 1]**

| | Calcination | NH₃ treatment | H₂O addition amount [µL g⁻¹] | CO₂ pressure [MPa] | CO₂ adsorption amount [mmol g⁻¹] | Spectrum in FIG. 3 |
|---|---|---|---|---|---|---|
| Shirasu(SSM) | No | No | 0 | - | - | (a) |
| Shirasu(SSM) | No | No | 0 | 1 | 0 | (b) |
| Sample 1 SSM NH₃ | No | Yes | 0 | - | - | (c) |
| Sample 1 SSM NH₃ | No | Yes | 0 | 1 | 0.0663 | (d) |
| Sample 2 SSM cal NH₃ | Yes | Yes | 0 | - | - | (e) |
| Sample 2 SSM cal NH₃ | Yes | Yes | 0 | 1 | 0.1350 | (f) |

As listed in Table 1, it is evident that the amount of carbon dioxide adsorbed by the shirasu without the heat treatment and ammonia treatment is almost zero while sample 1 subjected to the ammonia treatment adsorbs carbon dioxide. Further, it is evident that the amount of carbon dioxide adsorbed by sample 2, subjected to the heat treatment and ammonia treatment, increased more than that of sample 1.

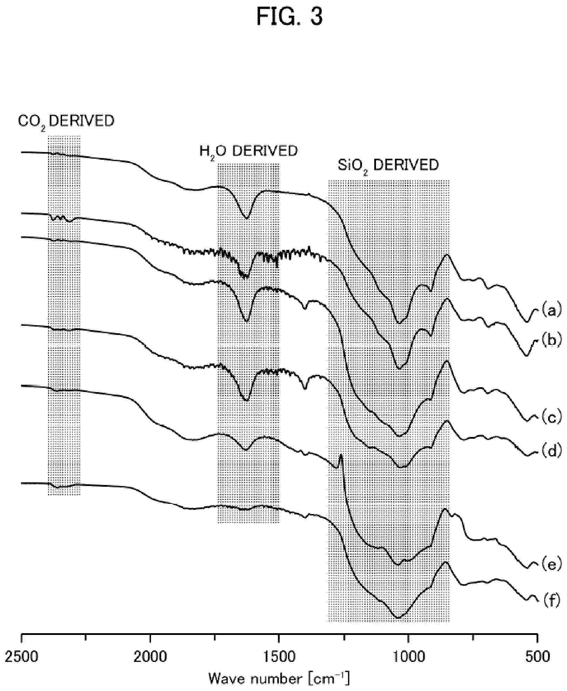

Next, an infrared spectroscopy analysis was performed on samples 1 and 2, and the shirasu raw material, which were brought into contact with carbon dioxide as described above. FIG. 3 illustrates the spectral results of the infrared spectroscopy analysis for the samples. Note that FIG. 3 also illustrates the spectral results of the infrared spectroscopy analysis for sample 1, sample 2, and the shirasu raw material that were not brought into contact with carbon dioxide. Table 1 illustrates the correspondence between reference signs (a) to (f) of spectra in FIG. 3 and the samples.

From FIG. 3 and Table 1, CO₂ derived peaks were observed in sample 1 and sample 2, which exhibited carbon dioxide adsorption. Note that in the spectrum (b) of FIG. 3, CO₂ derived peaks were also observed in the shirasu that was brought into contact with carbon dioxide. However, CO₂ adsorption was not observed in the thermogravimetric analysis as in Table 1, and thus it is presumed that the shirasu itself has little function to adsorb and retain CO₂.

As described above, it is evident that when the composition ratio of silicon/aluminum on the surface of the shirasu is within a range of 1 to 2.5, the ability to adsorb carbon dioxide is indicated. Further, it is evident that as the composition ratio of silicon/aluminum on the surface of the shirasu approaches 1, the ability to adsorb carbon dioxide is further enhanced. Note that since the shirasu balloon includes hollow bodies obtained by calcining the shirasu at a high temperature of about 1,000 °C, it is presumed that by performing the ammonia treatment, the adsorption performance of the shirasu balloon is similar to that of the shirasu subjected to the calcination and the ammonia treatment.

Next, the carbon dioxide adsorption test was performed on samples 2 and 3, and untreated shirasu (shirasu raw material) in contact with water. Specifically, 0.1 g of each sample was weighed and then placed in a pressure resistant container. Then, each sample was brought into contact with the amount of water droplets listed in Table 2. Then, each sample was brought into contact with pure CO₂ gas for 1 hour under temperature at pressures listed in Table 2. After each sample was taken out from the pressure resistant container, the amount of carbon dioxide adsorbed by each sample was calculated using thermogravimetric analysis (TG). The calculated amount of carbon dioxide adsorbed by each sample is listed in Table 2.

**[Table 2]**

| | Calcination | NH₃ treatment | H₂O addition amount [µL g⁻¹] | CO₂ pressure [MPa] | CO₂ adsorption amount [mmol g⁻¹] | Spectrum in FIG. 4 |
|---|---|---|---|---|---|---|
| Shirasu(SSM) | No | No | 30 | - | - | (a) |
| Shirasu(SSM) | No | No | 30 | 1 | 0.0041 | (b) |
| Sample 2 SSM cal NH₃ | Yes | Yes | 30 | - | - | (c) |
| Sample 2 SSM cal NH₃ | Yes | Yes | 30 | 1 | 0.2279 | (d) |
| Sample 2 SSM cal NH₃ | Yes | Yes | 30 | 0.5 | 0.1938 | (e) |
| Sample 2 SSM cal NH₃ | Yes | Yes | 30 | 0.1 | 0.1418 | (f) |
| Sample 3 A3NN NH₃ | Yes | Yes | 30 | - | - | (g) |
| Sample 3 A3NN NH₃ | Yes | Yes | 30 | 1 | 0.0916 | (h) |

As listed in Table 2, the amount of carbon dioxide adsorbed by the untreated shirasu was only 0.0041 mmol/g even when water was added. In contrast, it is evident that sample 2, subjected to the heat treatment and ammonia treatment, efficiently adsorbs carbon dioxide even when water is added. Further, from Tables 1 and 2, it is evident that when the CO₂ pressure is 1 MPa, the amount of carbon dioxide adsorbed by sample 2 is 0.1350 mmol/g when water was not added, but increased significantly to 0.2279 mmol/g when water was added.

From Table 2, when the pressure of carbon dioxide brought into contact with sample 2 was 0.1 MPa, the amount of carbon dioxide adsorbed was 0.1418 mmol/g; when the pressure thereof was 0.5 MPa, the amount of carbon dioxide adsorbed was 0.1938 mmol/g; and when the pressure thereof was 1 MPa, the amount of carbon dioxide adsorbed was 0.2279 mmol/g. That is, it is evident that as the pressure of carbon dioxide brought into contact increases, the amount of carbon dioxide adsorbed by sample 2 increases.

Further, from Table 2, it is evident that sample 3 including the shirasu balloon as the raw material can also exhibit carbon dioxide adsorption performance by adding water.

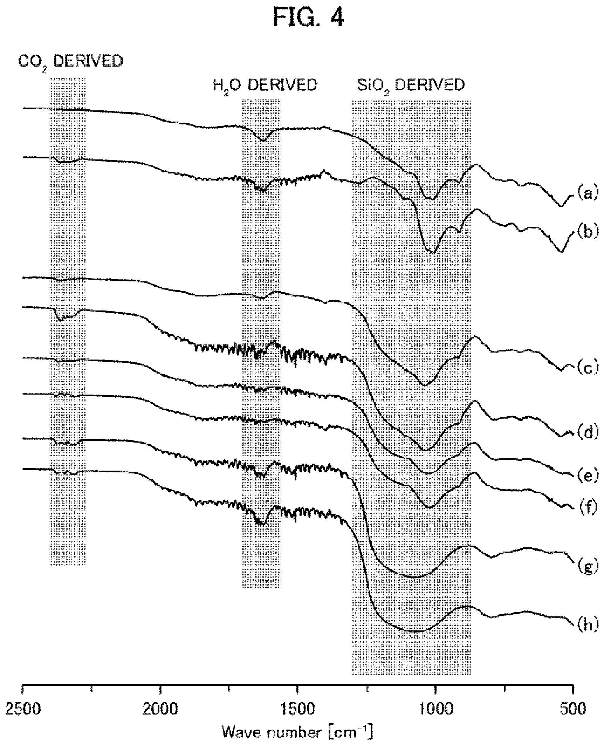

Next, as described above, the infrared spectroscopy analysis was performed on samples 2 and 3, and the shirasu raw material were brought into contact with carbon dioxide with water added. FIG. 4 illustrates the spectral results of the infrared spectroscopy analysis for the samples. Note that FIG. 4 also illustrates the spectral results of the infrared spectroscopy analysis for sample 2, sample 3, and the shirasu raw material which were subjected to only water addition. Table 2 illustrates the correspondence between reference signs (a) to (h) of spectra in FIG. 4 and the samples.

From FIG. 4 and Table 2, CO₂ derived peaks were observed in sample 2 and sample 3 which exhibited carbon dioxide adsorption.

As described above, it is evident that since the composition ratio of silicon/aluminum on the surface of shirasu is within a range of 1 to 2.5 and water is added to the shirasu, the carbon dioxide adsorption capacity is further enhanced. Note that although the mechanism by which the carbon dioxide adsorption capacity is improved by adding water to the shirasu is unclear, since water itself enhances the carbon dioxide adsorption capacity, it is thought that the water brought into contact with the shirasu is not limited to liquid water and may also be water vapor.

Although the present embodiment has been described above, the present embodiment is not limited to these descriptions, and various modifications are possible within the scope of the gist of the present embodiment.

## Claims

1. A carbon dioxide adsorbent, comprising:
at least one of shirasu or shirasu balloon each including silicon oxide and aluminum oxide in a total amount of 50% by weight or more, wherein
a composition ratio of silicon / aluminum on a surface of each of the shirasu and the shirasu balloon is within a range of 1 to 2.5.

2. The carbon dioxide adsorbent according to claim 1, wherein
the shirasu and the shirasu balloon include particles having an average particle size of 2 µm to 3 µm.

3. The carbon dioxide adsorbent according to claim 1 or 2, wherein
at least one of the shirasu or the shirasu balloon is in contact with water.

4. A method for producing a carbon dioxide adsorbent, the method comprising:
an ammonia treatment step of performing an ammonia treatment on a shirasu raw material which includes silicon oxide and aluminum oxide in a total amount of 50% by weight or more.

5. The method for producing the carbon dioxide adsorbent according to claim 4, further comprising: a heating step of heating the shirasu raw material before the ammonia treatment step.

6. The method for producing the carbon dioxide adsorbent according to claim 4 or 5, wherein the shirasu raw material includes particles having an average particle size of 2 µm to 3 µm.
